# EUROPÄISCHE PATENTSCHRIFT

(11) **EP 0 686 673 B1**
(45) Veröffentlichungstag und Bekanntmachung des Hinweises auf die Patenterteilung: **01.03.2000**
(21) Anmeldenummer: 95108488.8
(22) Anmeldetag: 02.06.1995
(51) Int. Cl.: C09B 57/04, C07D 209/44, C08K 5/3417, C09D 7/12, G03G 5/06

(54) **Isoindolinpigmente**
Isoindolin pigments
Pigments d'isoindoline

(30) Priorität: 07.06.1994 DE 4419849
(43) Veröffentlichungstag der Anmeldung: 13.12.1995
(73) Patentinhaber: Clariant GmbH, 65929 Frankfurt am Main (DE)
(72) Erfinder: Alfter, Frank, Dr., D-65779 Kelkheim (DE); Dietz, Erwin, Dr., Wilmington, DE, 19808 (US); Kapaun, Gustav, Dr., D-65812 Bad Soden (DE); Schiessler, Siegfried, Dr., D-65812 Bad Soden (DE)

(56) Entgegenhaltungen:
- EP-A- 0 061 094
- DE-A- 2 142 245
- FR-A- 2 325 697
- GB-A- 1 187 667
- US-A- 4 052 410

## Beschreibung

Die vorliegende Erfindung betrifft neue Isoindolinpigmente auf Basis von Aminobenzimidazolonen.

In DE-A-1 670 748 (GB-A-1 187 667) sind Isoindoline auf Basis von Benzimidazol beschrieben, die teilweise pigmentäre Eigenschaften besitzen, jedoch hinsichtlich der Temperaturstabilität und Ausblutechtheit nicht mehr den heutigen Anforderungen an Pigmente genügen.

DE-A-24 25 594 offenbart tri- bis tetrahalogenierte Iminoisoindolinonpigmente, die in 3-Stellung eine Carbonyl- oder eine weitere Iminogruppe enthalten, so daß im letztgenannten Fall symmetrische Isoindoline entstehen. Die Produkte sind aufgrund ihres hohen Chlorgehaltes ökologisch bedenklich.

Der vorliegenden Erfindung lag die Aufgabe zugrunde, neue Isoidolinpigmente zur Verfügung zu stellen, die heutigen Anforderungen an Pigmente gerecht werden.

Es wurde gefunden, daß unsymmetrische Isoindoline auf Basis von Aminobenzimidazolonen die vorliegende Aufgabe lösen.

Gegenstand der vorliegenden Erfindung ist ein Isoindolinpigment der Formel (I) 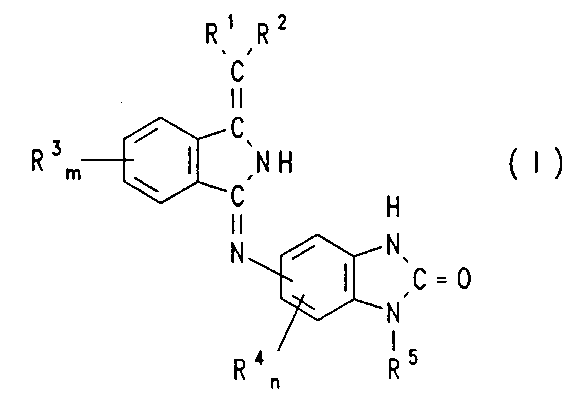 worin
- R¹: die Bedeutung -CN hat;
- R²: die Bedeutung -CN hat oder ein gesättigtes oder ungesättigtes aromatisches oder nichtaromatisches 5- bis 7-gliedriges heterocyclisches Ringsystem ist, das durch Ankondensation von oder Verbrückung zu weiteren heterocyclischen oder isocyclischen Ringsystemen modifiziert sein kann, wobei die Heteroatome N, O und/oder S sind;
oder eine Gruppe -CO-NR⁶R⁷ ist, worin R⁶ und R⁷ gleich oder verschieden sind und Wasserstoff oder C₁-C₄-Alkyl bedeuten;
oder eine Gruppe -CO-NR⁶R⁸ ist, worin R⁸ einen unsubstituierten oder mit ein bis 5 Resten C₁-C₄-Alkyl, Halogen, Trifluormethyl, C₁-C₄-Alkoxy, Carbmethoxy, Carbethoxy, Carbonamid, mit einer C₁-C₄-Alkyl- oder Phenylgruppe substituiertes Carbonamid, Nitro, C₁-C₄-Acylamino oder Hydroxy substituierten gesättigten oder ungesättigten, aromatischen oder nichtaromatischen, isocyclischen oder heterocyclischen 5- bis 7-gliedrigen Ring darstellt, der durch Ankondensation von oder Verbrückung zu weiteren heterocyclischen oder isocylischen Ringsystemen modifiziert sein kann, wobei die Heteroatome N, O und/oder S sind; oder worin
- R¹ und R²: gemeinsam einen unsubstituierten oder mit ein bis 5 Resten C₁-C₄-Alkyl, C₁-C₄-Alkoxy, Halogen, Trifluormethyl, Carbmethoxy, Carbethoxy, Carbonamid, mit einer C₁-C₄-Alkyl- oder Phenylgruppe substituiertes Carbonamid, C₁-C₄-Acylamino oder Hydroxy substituierten gesättigten oder ungesättigten, aromatischen oder nichtaromatischen, heterocyclischen 5- bis 7-gliedrigen Ring darstellt, der durch Ankondensation von oder Verbrückung zu weiteren heterocyclischen oder isocylischen Ringsystemen modifiziert sein kann, wobei die Heteroatome N, O und/oder S sind;
die Reste R³ und R⁴ jeweils gleiche oder verschiedene der Bedeutungen
- R³: Wasserstoff, C₁-C₄-Alkyl, Phenyl, C₁-C₄-Alkoxy, Halogen oder C₁-C₄-Acylamino;
- R⁴: Wasserstoff, C₁-C₄-Alkyl, Halogen, Trifluormethyl, Methoxy, Ethoxy oder Nitro haben;
- m: eine Zahl von 1 bis 4 ist;
- n: eine Zahl von 1 bis 3 ist; und
- R⁵: Wasserstoff oder C₁-C₄-Alkyl bedeutet.

Von besonderem Interesse sind Isoindolinpigmente der Formel (I),
worin
- R¹: die Bedeutung -CN hat;
- R²: die Bedeutung -CN hat oder ein Benzimidazolyl-2-Rest, Chinazolonyl-2-Rest, Chinoxalyl-2-Rest oder ein Chinolinyl-2-Rest ist;
oder eine Gruppe -CO-NR⁶R⁷ ist, worin R⁶ und R⁷ gleich oder verschieden sind und Wasserstoff, Methyl oder Ethyl bedeuten; oder eine Gruppe -CO-NR⁶R⁸ ist, worin R⁸ ein Phenylring oder Naphthylring, ein mit ein bis 5 Halogenatomen, COO(C₁-C₄)-alkyl-, CONH₂-, C₁-C₄-Alkyl-, C₁-C₄-Alkoxy-, CF₃- oder OH-Gruppen substituierter Phenylring oder Naphthylring, oder ein Benzimidazolyl-, Benzimidazolonyl- oder Chinoxalyl-Ring ist; oder worin
- R¹ und R²: gemeinsam einen heterocyclischen Ring aus der Gruppe Barbitursäure, 2,4-Dioxo-1,2,3,4-tetrahydrochinolin und Thionaphthen bilden.

Von besonderem Interesse sind Isoindolinpigmente der Formel (I), worin
- R³: Wasserstoff, Methyl, Ethyl, Phenyl, Methoxy, Ethoxy, Fluor, Chlor, Brom oder Acetylamino;
- R⁴: Wasserstoff, Methyl, Ethyl, Fluor, Chlor, Brom, Trifluormethyl, Methoxy oder Ethoxy und
- R⁵: Wasserstoff, Methyl oder Ethyl bedeuten.

Von ganz besonderem Interesse sind Isoindolinpigmente der Formel (I), worin
- R¹: die Bedeutung -CN hat,
- R²: die Bedeutung -CN, Benzimidazolyl-2, -CONH₂, -CONHC₆H₄Cl, -CONHC₆H₃Cl₂, -CONHC₆H₄CH₃, -CONHC₆H₄COOC₂H₅, -CONHCONH₂, -CONHC₆H₄COOCH₃, -CONHC₆H₃(COOCH₃)₂ oder -CONH-naphthyl hat,
- R³: die Bedeutung Wasserstoff hat,
- R⁴: die Bedeutung Wasserstoff, Cl, OCH₃ oder CH₃ hat,
- n: die Zahl 1 ist und
- R⁵: die Bedeutung Wasserstoff hat.

Von besonderem Interesse sind ferner Isoindolinpigmente der Formel (I), worin R¹ und R² gemeinsam einen Barbitursäure-, Methylbarbitursäure-, Phenylbarbitursäure-, 2,4-Dioxo-1,2,3,4-tetrahydrochinolin- oder 3-Hydroxythionaphthen-Ring bilden.

Von ganz besonderem Interesse ist das Isoindolinpigment der Formel

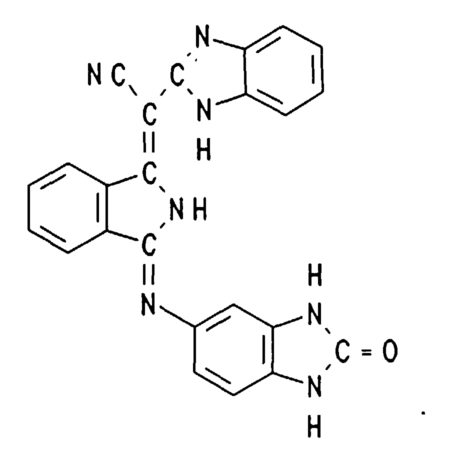

Gegenstand der vorliegenden Erfindung ist auch ein Verfahren zur Herstellung eines Isoindolinpigments, indem man a) ein Isoindolin der Formel (II), das in 1- und 3-Stellung nukleophil austauschbare Reste X und Y enthält, 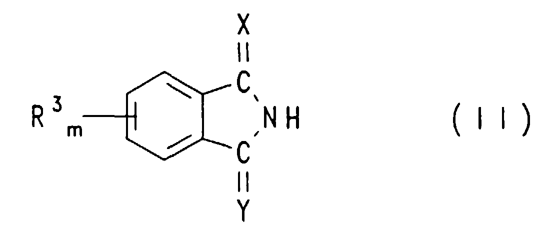 mit einer Verbindung der Formel (III)

R¹-CH₂-R² (III),

worin die H-Atome der -CH₂-Gruppe CH-acide sind, unter Bildung einer Verbindung der Formel (IV) umsetzt 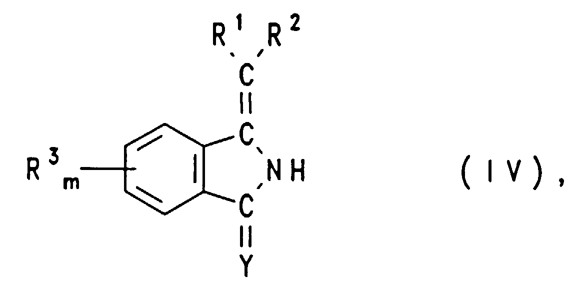 und anschließend
b) die Verbindung der Formel (IV) mit einem Benzimidazolon der Formel (V) umsetzt

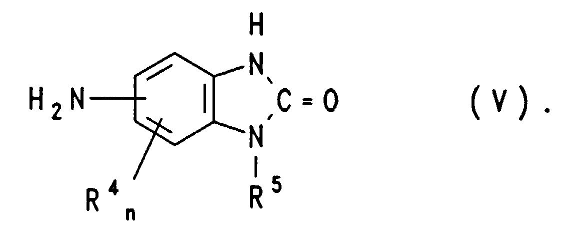

Ausgehend von Isoindolinen, die in 1- und 3-Stellung leicht austauschbare Substituenten enthalten, wie sie in der Literatur bekannt sind, wird der Kondensationsschritt a) mit Verbindungen durchgeführt, die zwei leicht austauschbare aktive Wasserstoffatome an einem Kohlenstoffatom haben.

Als reaktive Isoindoline der Formel (II) kommen beispielsweise solche in Betracht, in denen der Rest X eine Iminogruppe oder eine (Halb)Aminal- oder eine Ketal-Gruppierung darstellt und der Rest Y eine Iminogruppe ist, beispielsweise 1,3-Diiminoisoindolin (DE-A-879100) 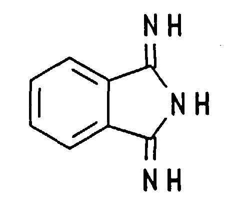 sowie die tautomeren Formen davon, weiterhin dessen Glykolanlagerungsprodukt 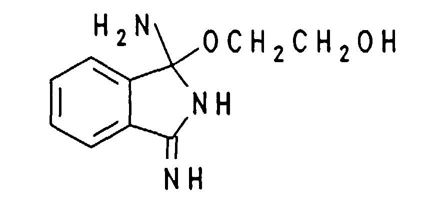 oder 1,1-Dialkoxyisoindoline, 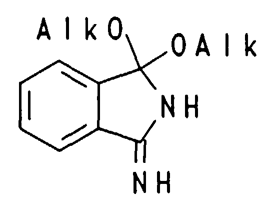 wobei Alk für Alkylgruppen, vorzugsweise C₁-C₄-Alkylgruppen, steht (DE-A-879102).

Beispielsweise reagiert 1-Amino-1-(2-hydroxyethoxy)-3-imino-isoindolin nach folgendem Schema:

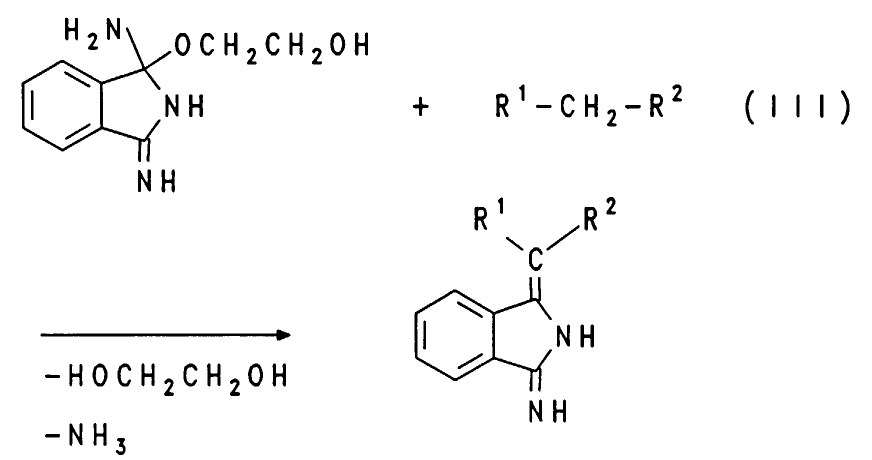

Im obigen Reaktionsschema ist das Edukt in einer seiner möglichen tautomeren Form dargestellt.

Als Verbindungen der Formel (III) kommen beispielsweise in Frage: Malodinitril, Cyanessigsäureamide wie z.B. Cyanessigsäureamid, Cyanessigsäuremethylamid, Cyanessigsäure-ethylamid, Cyanessigsäurephenylamid, Cyanessigsäure-4-chlorphenylamid, Cyanessigsäure-2-chlorphenylamid, Cyanessigsäure-2,4-dichlorphenylamid, Cyanessigsäure-2-tolylamid, Cyanessigsäure-3-tolylamid, Cyanessigsäure-4-tolylamid, Cyanessigsäure-4-carbethoxyphenylamid, Cyanessigsäure-4-carbonamidphenylamid, Cyanessigsäure-3,5-dicarbomethoxyphenylamid, Cyanessigsäure-4-acetylaminophenylamid, Cyanessigsäure-2-methoxyphenylamid und Cyanessigsäure-naphthylamid, wobei die aromatischen Reste mit ein oder mehreren Resten Ethoxy, Brom, Fluor und/oder Trifluormethyl substituiert sein können;
ferner Verbindungen der Formel NC-CH₂-Het,
wobei Het für einen heterocyclischen Ring steht, beispielsweise 2-(Cyanmethyl)benzimidazol, 2-(Cyanmethyl)-chinazolinon oder 2-(Cyanmethyl)-chinolin;
ferner heterocyclische Ringsysteme der Formel 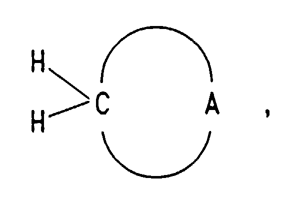 in der A mit C einen fünf- bis siebengliedrigen heterocyclischen Ring bildet, der gegebenenfalls annelliert mit weiteren isocyclischen oder heterocyclischen Ringen ist, beispielsweise Barbitursäure, Methylbarbitursäure, Phenylbarbitursäure, 2,4-Dioxo-1,2,3,4-tetrahydrochinolin und 3-Hydroxythionaphthen.

Die besonders bevorzugte Verbindung der Formel (III) ist 2-(Cyanmethyl)-benzimidazol.

In dieser ersten Kondensationstufe können als Lösemittel vorzugsweise Alkohole, wie z.B. Methanol, Ethanol und Propanol, verwendet werden. Teilweise können auch Wasser und wäßrige Alkohole bei Raumtemperatur oder bis zum Siedepunkt der Lösemittel eingesetzt werden.

Werden sehr reaktive Methylenverbindungen wie z.B. 2-(Cyanmethyl)-benzimidazol eingesetzt, so können bereits in diesem ersten Reaktionsschritt unerwünschte disubstituierte Isoindoline entstehen.
Dieser unerwünschten Zweit-Kondensation kann man entgegenwirken, indem man bei möglichst tiefer Temperatur, zweckmäßigerweise bei 30 bis 60°C, vorzugsweise bei 45 bis 55°C, und mit stöchiometrischem Unterschuß der reaktiven Methylenverbindung die Reaktion durchführt. Zweckmäßig ist ein Molverhältnis zwischen der reaktiven Methylenverbindung der Formel (III) und dem Isoindolin der Formel (II) von 0,8:1 bis 0,98:1, vorzugsweise 0,85:1 bis 0,97:1.

Es wurde darüberhinaus erfindungsgemäß gefunden, daß auch die Einstellung eines geeigneten pH-Wertes dieser unerwünschten Zweitkondensation entgegenwirkt. Der optimale pH-Bereich muß von Fall zu Fall ermittelt werden und liegt bei Verwendung von 2-(Cyanmethyl)-benzimidazol vorzugsweise im Bereich von 5 bis 9, besonders bevorzugt im Bereich von 6 bis 8,5.

Der zweite Kondensationsschritt wird mit Aminobenzimidazolonen der Formel (V) durchgeführt und läuft beispielsweise nach folgendem Schema ab: 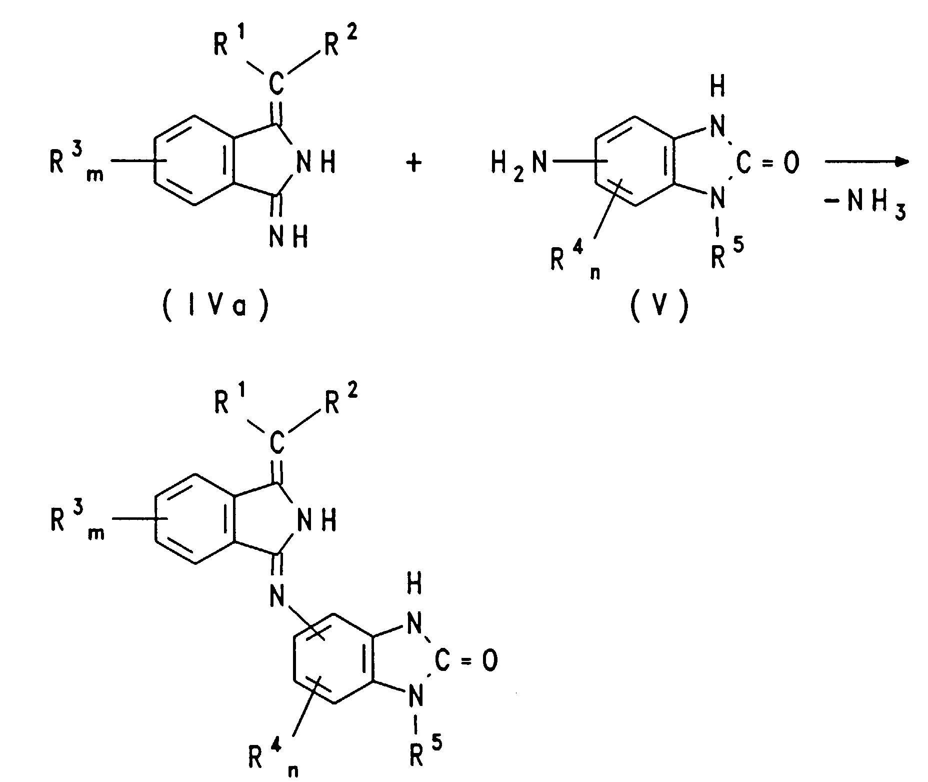 Als Verbindungen der Formel (V) kommen vorzugsweise in Betracht: 5-Aminobenzimidazolon, 5-Amino-6-chlorbenzimidazolon, 5-Amino-6-methylbenzimidazolon, 5-Amino-6-methoxybenzimidazolon und 5-Amino-1-methyl-benzimidazolon, insbesondere 5-Aminobenzimidazolon.

Die Reaktion findet unter saurer Katalyse statt, beispielsweise können Essigsäure oder Propionsäure als Katalysator und gleichzeitig auch als Lösemittel dienen.

Geeignete Lösemittel für den zweiten Kondensationsschritt sind beispielsweise N-Methylpyrrolidon, Dimethylformamid, Alkohole, wie Methanol, sowie Gemische der genannten Lösemittel mit Wasser. Die Molverhältnisse zwischen der Verbindung der Formel (IV) oder (IVa) mit dem Benzimidazolon der Formel (V) betragen zweckmäßigerweise 1:1 bis 1:1,2.

Die nach dem erfindungsgemäßen Verfahren entstehenden Rohpigmente können durch einen mechanischen Prozeß, wie beispielsweise durch eine Naß- oder Trockenmahlung, oder durch chemische Prozesse feinverteilt werden.

Die Endeinstellung kann durch einen Finishprozeß in einem wäßrigen und/oder lösemittelhaltigen System vorgenommen werden, gegebenenfalls unter Zusatz üblicher Additive.

Die erfindungsgemäßen Pigmente eignen sich besonders zum Pigmentieren von hochmolekularen organischen Materialien. Hochmolekulare organische Materialien sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Es spielt dabei keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmentzubereitungen als Verschnitte oder in Form von Präparationen oder Dispersionen zu benutzen. Bezogen auf das zu pigmentierende hochmolekulare organische Material, setzt man die erfindungsgemäßen Pigmente in einer Menge von vorzugsweise 0,1 bis 10 Gew.-% ein.

Als Medium besonders bevorzugt sind Polyolefine, wie Polyethylen und Polypropylen. Die erfindungsgemäßen Isoindolinpigmente zeichnen sich durch besonders gute Überlackierechtheit, Ausblutechtheit und hohe Temperaturstabilität aus.

Die erfindungsgemäßen Isoindolinpigmente sind geeignet als Farbmittel in elektrophotographischen Tonern und Entwicklern, wie z. B. Ein- oder Zweikomponentenpulvertonern (auch Ein- oder Zweikomponenten-Entwickler genannt), Magnettonern, Flüssigtonern, Polymerisationstonern sowie weiteren Spezialtonern (L.B. Schein, "Electrophotography and Development Physics"; Springer Series in Electrophysics 14, Springer Verlag, 2nd edition, 1992).

Typische Tonerbindermittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein zugesetzt bekommen können.

Des weiteren sind die erfindungsgemäßen Isoindolinpigmente geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies Press, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Isoindolinpigmente geeignet als Farbmittel in Ink-Jet Tinten auf wäßriger und nichtwäßriger Basis sowie in solchen Tinten, die nach dem Hot-melt Verfahren arbeiten.

In den folgenden Beispielen bedeuten Teile Gewichtsteile, "d. Th." bedeutet "der theoretischen Ausbeute".

### Herstellungsbeispiele

### Beispiel 1:

### a) 1-[(Cyan-benzimidazolyl-2')-methylen]-3-imino-isoindolin

51,8 Teile 1-Amino-1-(2-hydroxyethoxy)-3-imino-isoindolin (0,25 Mol) werden mit 31,4 Teilen 2-(Cyanmethyl)-benzimidazol (0,2 mol) in 600 Teile Methanol eingetragen und 6½ Stunden unter Rühren und Rückfluß gekocht. Es bildet sich ein gelber Niederschlag. Man läßt erkalten, saugt bei Raumtemperatur ab, wäscht den Filterkuchen gründlich mit Methanol und trocknet ihn bei 60°C im Vakuum. Auswaage: 56,4 Teile = 99 % d. Th. 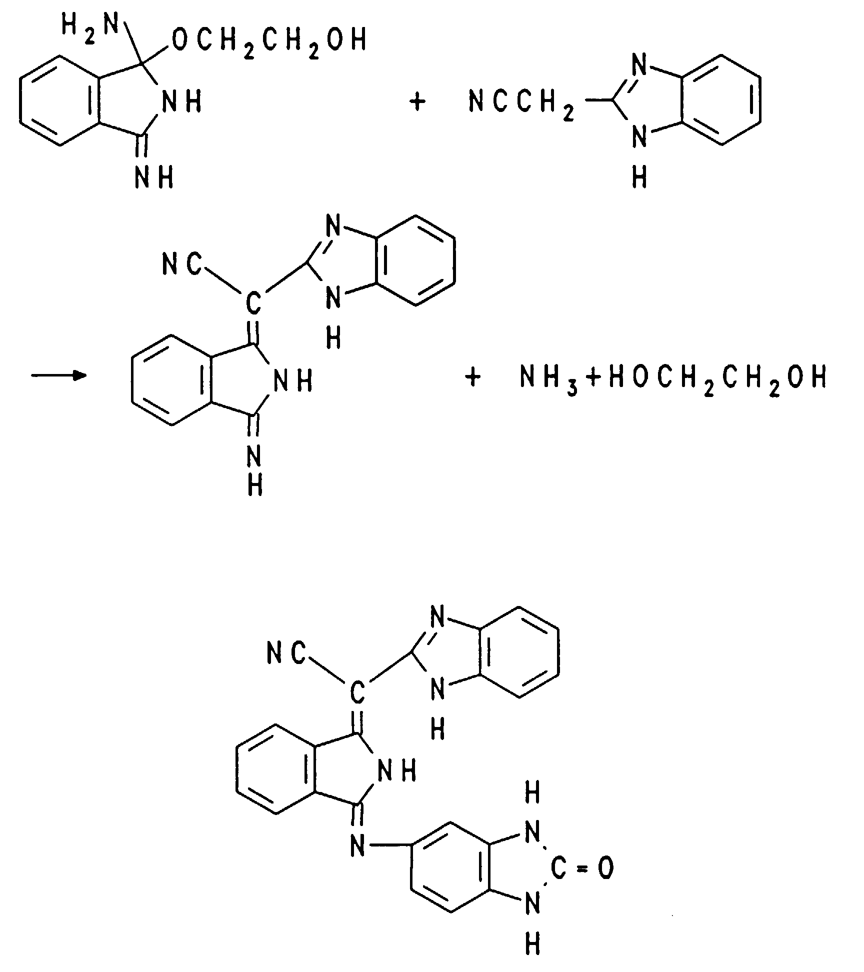 28,5 Teile 1-[(Cyan-benzimidazolyl-2')-methylen]-3-imino-isoindolin (0,1 mol) und 14,9 Teile 5-Aminobenzimidazolon (0,1 Mol) werden in 1000 Teile Eisessig eingetragen und 1 Stunde bei Raumtemperatur gerührt. Man erhitzt zum Sieden und rührt 3 Stunden am Kochpunkt. Danach setzt man 375 Teile Dimethylformamid (DMF) hinzu und rührt 3 Stunden bei 130 bis 135°C. Man saugt bei 90 bis 100°C ab und wäscht mit 1000 Teilen Eisessig/DMF (2:1) bei 90 bis 100°C. Danach wäscht man mit Methanol und Wasser und trocknet im Vakuum bei 60°C. Auswaage: 37,9 Teile = 91 % d. Th.

Unterwirft man dieses Rohpigment z.B. einer Lösemittel-Schwingvermahlung, so erhält man ein Pigment, das PVC und Polyethylen in oranger Farbe einfärbt. Es ist bei 300°C noch temperaturbeständig und ergibt ausblutechte Färbungen.

### Beispiel 2:

### a) 1,1-Dimethoxy-3-imino-isoindolin

25,6 Teile o-Phthalodinitril (0,2 Mol) werden in 200 Teilen Methanol eingerührt. Bei 20°C setzt man 4,5 Teile Natriummethylatlösung, 30 %ig in Methanol (0,025 Mol), hinzu und rührt 16 Stunden bei 20°C. Man erhält eine Lösung von 1,1-Dimethoxy-3-imino-isoindolin.

### b) 1-[(Cyan-benzimidazolyl-2')-methylen]-3-imino-isoindolin

Die nach a) erhaltene Lösung von 1,1-Dimethoxy-3-imino-isoindolin wird mit 9,6 Teilen Essigsäure und 13,5 Teilen Natriumbicarbonat versetzt. In diese milchige Suspension tropft man eine Lösung von 28,3 Teilen 2-(Cyanmethyl)-benzimidazol (0,18 Mol) in 200 Teile Methanol bei Raumtemperatur hinzu. Dann erhitzt man unter Rühren 4 Stunden auf 50°C. Man saugt bei Raumtemperatur ab, wäscht mit Methanol und dann mit Wasser. Man trocknet bei 60°C im Vakuum. Auswaage: 49,1 Teile = 96 % d. Th.

Verfährt man bei der Synthese gemäß 2b) und unterläßt die Zugabe von Natriumbicarbonat, so bildet sich ein beträchtlicher Anteil des unerwünschten Nebenproduktes 1,3-Bis-[(Cyan-benzimidazolyl-2')-methylen]-isoindolin.

### c) Zweite Kondensationstufe mit 5-Aminobenzimidazolon

28,5 Teile 1-[(Cyan-benzimidazolyl-2')-methylen]-3-imino-isoindolin (0,1 mol) und 14,9 Teile 5-Aminobenzimidazolon (0,1 Mol) werden in 400 Teile Eisessig eingetragen und 1 Stunde bei Raumtemperatur verrührt. Man erhitzt zum Sieden und rührt 3 Stunden am Kochpunkt. Danach saugt man bei 90 bis 100°C ab und wäscht mit Methanol und Wasser. Man trocknet im Vakuum bei 60°C. Auswaage: 40,5 Teile = 97 % d. Th.

### Beispiel 3:

### a) Die Herstellung von 1,1-Dimethoxy-3-imino-isoindolin erfolgt wie in Beispiel 2a).

### b) 1-[(Cyan-benzimidazolyl-2')-methylen]-3-iminoisoindolin

Die nach 2a) erhaltene Lösung von 1,1-Dimethoxy-3-imino-isoindolin wird mit 6,8 Teilen Essigsäure und 8,9 Teilen Natriumacetat versetzt. Dazu tropft man eine Lösung von 28,3 Teilen 2-(Cyanmethyl)-benzimidazol (0,18 Mol) in 200 Teilen Methanol bei Raumtemperatur hinzu. Dann erhitzt man unter Rühren 4 Stunden auf 50°C, saugt bei Raumtemperatur ab und wäscht mit Methanol und dann mit Wasser. Man trocknet bei 60°C im Vakuum. Auswaage: 49,5 Teile = 96,5 % d. Th.

Verfährt man bei der Synthese gemäß 3b) und unterläßt die Zugabe von Natriumacetat, so bildet sich ein beträchtlicher Anteil des unerwünschten Nebenproduktes 1,3-Bis-[(Cyan-benzimidazolyl-2')-methylen]-isoindolin.

### c) Zweite Kondensationstufe mit 5-Aminobenzimidazolon

1-[(Cyan-benzimidazolyl-2')-methylen]-3-imino-isoindolin kann auch in wasserfeuchter Form weiterverarbeitet werden. Dazu verfährt man wie in Beispiel 3b) angegeben und verzichtet auf die Trocknung des feuchten Filterkuchens.

84,7 Teile feuchter Filterkuchen, bestehend aus 28,5 Teilen 1-[(Cyan-benzimidazolyl-2')methylen]-3-imino-isoindolin (0,1 mol), 56,2 Teilen Wasser und 14,9 Teilen 5-Aminobenzimidazolon (0,1 Mol), werden in 900 Teile Methanol und 100 Teile Eisessig eingetragen. Man verrührt 1 Stunde bei Raumtemperatur und erhitzt 6,5 Stunden am Kochpunkt. Danach saugt man heiß ab und wäscht mit Methanol und Wasser. Man trocknet im Vakuum bei 60°C. Auswaage: 40,9 Teile = 98 % d. Th.

### Beispiel 4:

### a) Die Herstellung von 1-[(Cyan-benzimidazolyl-2')-methylen]-3-imino-isoindolin erfolgt wie in Beispiel 2 b.

### b) Zweite Kondensationsstufe mit 5-Aminobenzimidazolon

28,5 Teile 1-[(Cyan-benzimidazolyl-2')-methylen]-3-imino-isoindolin (0,1 Mol) und 14,9 Teile 5-Aminobenzimidazolon (0,1 Mol) werden in 150 Teilen Eisessig und 289 Teilen N-Methylpyrrolidon eingetragen und 1 Stunde bei Raumtemperatur verrührt. Man erhitzt in einer Stunde auf 110°C und hält 6 Stunden auf 110°C. Danach saugt man bei 110°C ab. Man wäscht mit einer Mischung aus Eisessig und N-Methylpyrrolidon (im Verhältnis 2:1) von 90°C. Danach wäscht man mit Methanol und Wasser. Man trocknet im Vakuum bei 60°C. Auswaage: 39,3 Teile = 94 % d. Th.

Verfährt man in Analogie zu den Beispielen 1 bis 4 und setzt anstelle von 2-(Cyanmethyl)-benzimidazol Cyanessigsäureamide ein und läßt diese Monokondensationsprodukte und 5-Aminobenzimidazolon in einem zweiten Kondensationsschritt reagieren, so gelangt man ebenfalls zu wertvollen Pigmenten, die in nachfolgender Tabelle 1 aufgelistet sind.

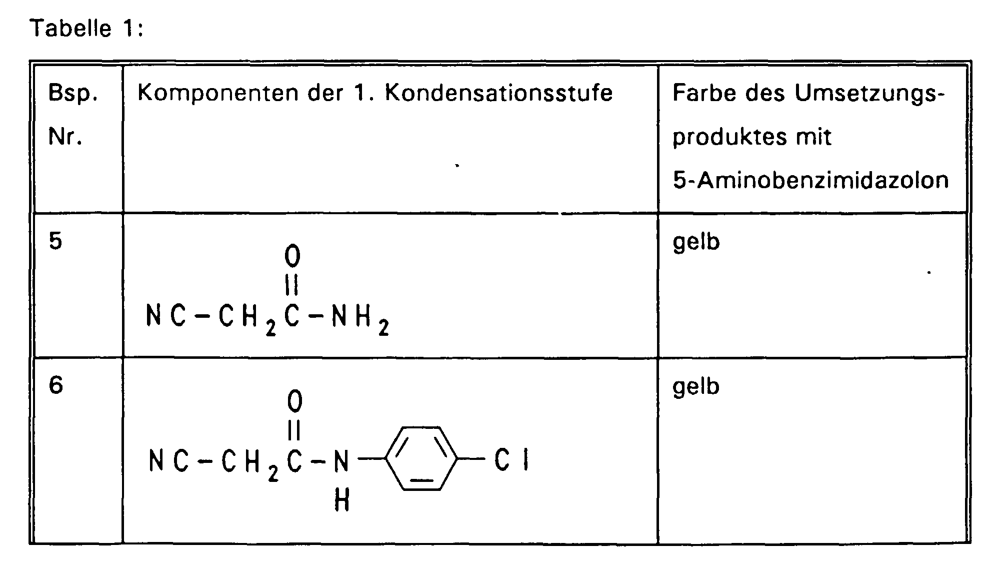

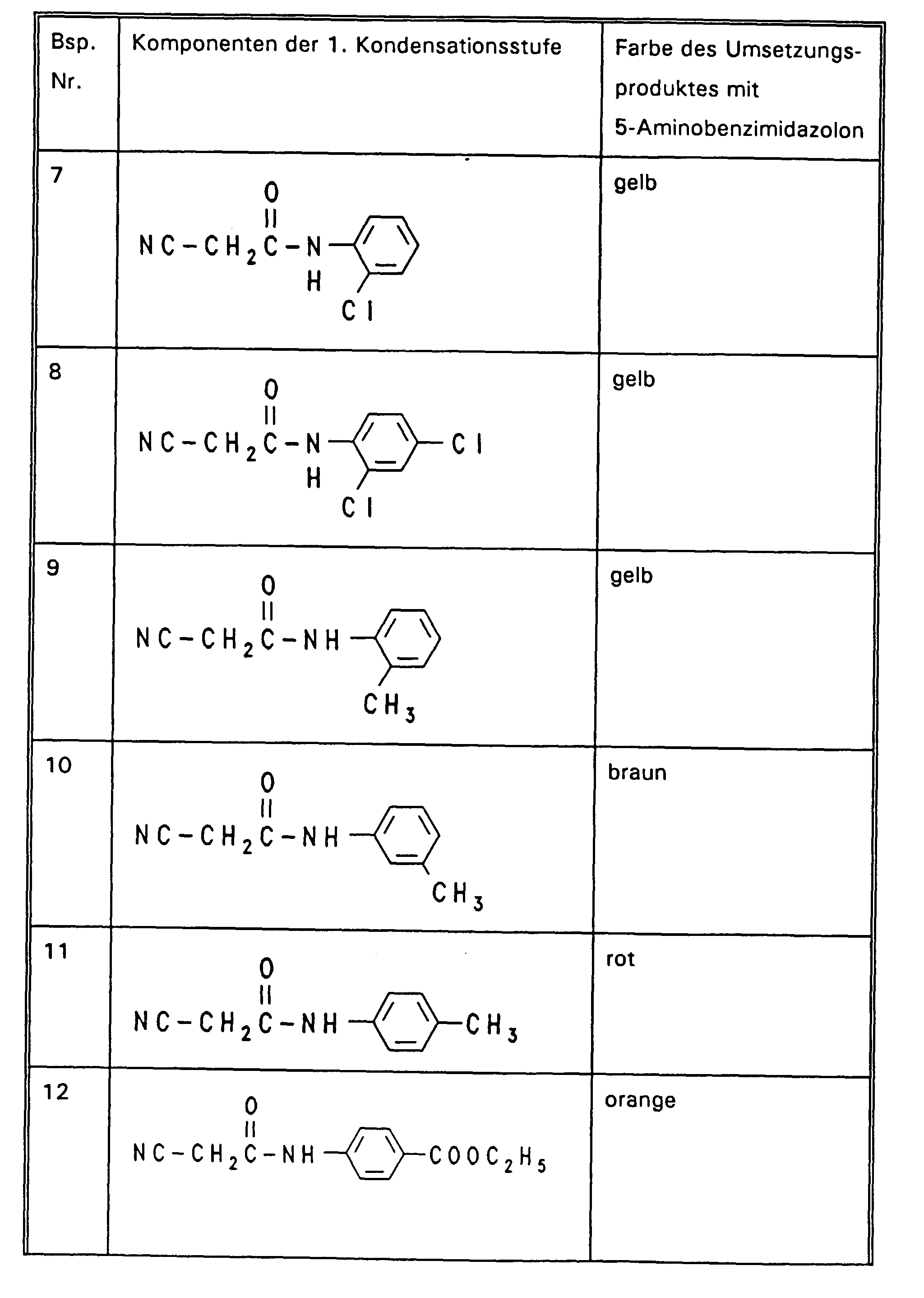

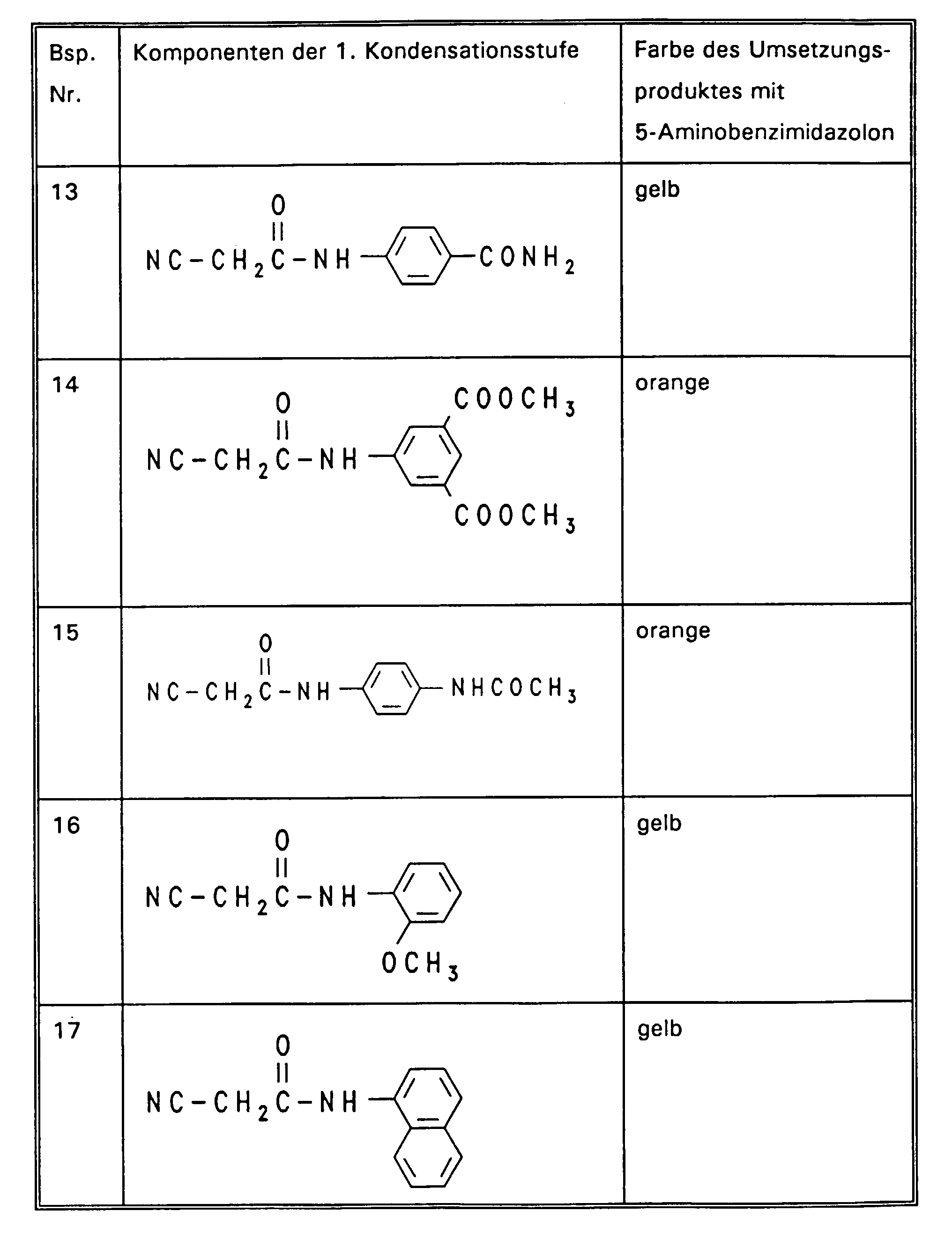

Geht man von 1-[(Cyan-benzimidazolyl-2')-methylen]-3-imino-isoindolin aus und kondensiert in der 2. Stufe mit substituiertem 5-Aminobenzimidazolonen gemäß Tabelle 2, so erhält man ebenfalls wertvolle Pigmente:

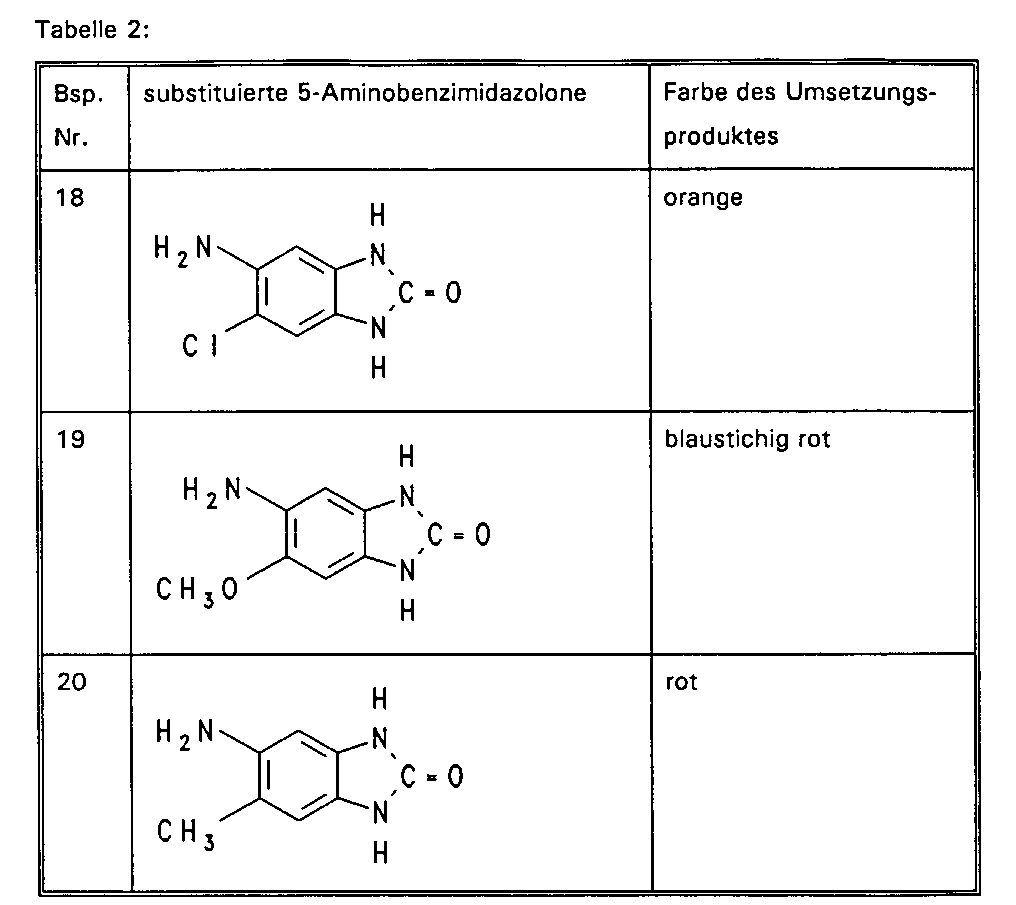

## Patentansprüche

1. Isoindolinpigment der Formel (I) 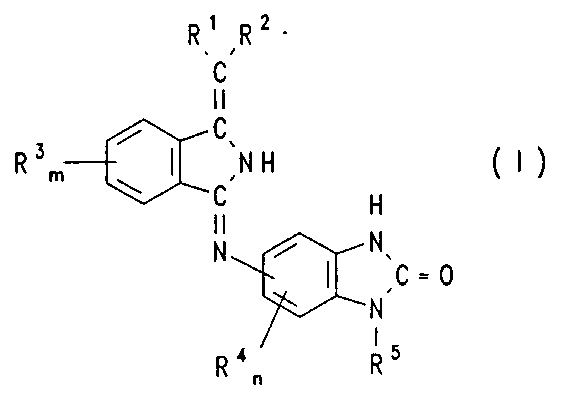 worin
R¹ die Bedeutung -CN hat;
R² die Bedeutung -CN hat oder ein gesättigtes oder ungesättigtes aromatisches oder nichtaromatisches 5- bis 7-gliedriges heterocyclisches Ringsystem ist, das durch Ankondensation von oder Verbrückung zu weiteren heterocyclischen oder isocyclischen Ringsystemen modifiziert sein kann, wobei die Heteroatome N, O und/oder S sind;
oder eine Gruppe -CO-NR⁶R⁷ ist, worin R⁶ und R⁷ gleich oder verschieden sind und Wasserstoff oder C₁-C₄-Alkyl bedeuten;
oder eine Gruppe -CO-NR⁶R⁸ ist, worin R⁸ einen unsubstituierten oder mit ein bis 5 Resten C₁-C₄-Alkyl, Halogen, Trifluormethyl, C₁-C₄-Alkoxy, Carbmethoxy, Carbethoxy, Carbonamid, mit einer C₁-C₄-Alkyl- oder Phenylgruppe substituiertes Carbonamid, Nitro, C₁-C₄-Acylamino oder Hydroxy substituierten gesättigten oder ungesättigten, aromatischen oder nichtaromatischen, isocyclischen oder heterocyclischen 5- bis 7-gliedrigen Ring darstellt, der durch Ankondensation von oder Verbrückung zu weiteren heterocyclischen oder isocylischen Ringsystemen modifiziert sein kann, wobei die Heteroatome N, O und/oder S sind; oder worin
R¹ und R² gemeinsam einen unsubstituierten oder mit ein bis 5 Resten C₁-C₄-Alkyl, C₁-C₄-Alkoxy, Halogen, Trifluormethyl, Carbmethoxy, Carbethoxy, Carbonamid, mit einer C₁-C₄-Alkyl- oder Phenylgruppe substituiertes Carbonamid, C₁-C₄-Acylamino oder Hydroxy substituierten gesättigten oder ungesättigten, aromatischen oder nichtaromatischen, heterocyclischen 5- bis 7-gliedrigen Ring darstellt, der durch Ankondensation von oder Verbrückung zu weiteren heterocyclischen oder isocylischen Ringsystemen modifiziert sein kann, wobei die Heteroatome N, O und/oder S sind;
die Reste R³ und R⁴ jeweils gleiche oder verschiedene der Bedeutungen
R³ Wasserstoff, C₁-C₄-Alkyl, Phenyl, C₁-C₄-Alkoxy, Halogen oder C₁-C₄-Acylamino;
R⁴ Wasserstoff, C₁-C₄-Alkyl, Halogen, Trifluormethyl, Methoxy, Ethoxy oder Nitro haben;
m eine Zahl von 1 bis 4 ist;
n eine Zahl von 1 bis 3 ist; und
R⁵ Wasserstoff oder C₁-C₄-Alkyl bedeutet.

2. Isoindolinpigment nach Anspruch 1, dadurch gekennzeichnet, daß
R¹ die Bedeutung -CN hat und
R² die Bedeutung -CN hat oder ein Benzimidazolyl-2-Rest, Chinazolonyl-2-Rest, Chinoxalyl-2-Rest oder Chinolinyl-2-Rest ist; oder eine Gruppe -CO-NR⁶R⁷ ist, worin R⁶ und R⁷ gleich oder verschieden sind und Wasserstoff, Methyl oder Ethyl bedeuten; oder eine Gruppe -CO-NR⁶R⁸ ist, worin R⁸ ein Phenylring oder Naphthylring, ein mit 1 bis 5 Halogenatomen, COO(C₁-C₄)-alkyl-, Acetylamino-, CONH₂-, C₁-C₄-Alkyl-, C₁-C₄-Alkoxy-, CF₃- oder Hydroxy-Gruppen substituierter Phenylring oder Naphthylring, oder ein Benzimidazolylring, Benzimidazolonylring oder Chinoxalylring ist;
R¹ und R² gemeinsam einen heterocyclischen Ring aus der Gruppe Barbitursäure, 2,4-Dioxo-1,2,3,4-tetrahydrochinolin und Thionaphthen bilden.

3. Isoindolinpigment nach Anspruch 1 oder 2, dadurch gekennzeichnet, daß
R³ Wasserstoff, Methyl, Ethyl, Phenyl, Methoxy, Ethoxy, Fluor, Chlor, Brom oder Acetylamino;
R⁴ Wasserstoff, Methyl, Ethyl, Fluor, Chlor, Brom, Trifluormethyl, Methoxy oder Ethoxy und
R⁵ Wasserstoff, Methyl oder Ethyl bedeuten.

4. Isoindolinpigment nach mindestens einem der Ansprüche 1 bis 3, dadurch gekennzeichnet, daß
R¹ die Bedeutung -CN hat,
R² die Bedeutung -CN, Benzimidazolyl-2, -CONH₂, -CONHC₆H₄Cl, -CONHC₆H₃Cl₂, -CONHC₆H₄CH₃, -CONHC₆H₄COOC₂H₅, -CONHCONH₂, -CONHC₆H₄COOCH₃, -CONHC₆H₃(COOCH₃)₂ oder -CONH-naphthyl hat,
R³ die Bedeutung Wasserstoff hat,
R⁴ die Bedeutung Wasserstoff, Cl, OCH₃ oder CH₃ hat,
n die Zahl 1 ist und
R⁵ die Bedeutung Wasserstoff hat.

5. Isoindolinpigment nach mindestens einem der Ansprüche 1 bis 4, dadurch gekennzeichnet, daß R¹ und R² zusammen einen Barbitursäure-, Methylbarbitursäure-, Phenylbarbitursäure-, 2,4-Dioxo-1,2,3,4-tetrahydrochinolin- oder 3-Hydroxy-thionaphthen-Ring bilden.

6. Isoindolinpigment der Formel

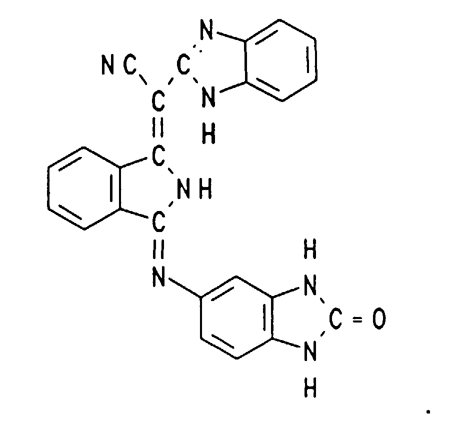

7. Verfahren zur Herstellung eines Isoindolinpigments nach einem oder mehreren der Ansprüche 1 bis 6, dadurch gekennzeichnet, daß man a) ein Isoindolin der Formel (II), das in 1- und 3-Stellung nukleophil austauschbare Reste X und Y enthält, 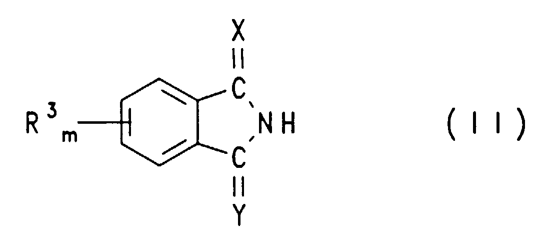 mit einer Verbindung der Formel (III)
R¹-CH₂-R² (III),
worin die H-Atome der -CH₂-Gruppe CH-acide sind, unter Bildung einer Verbindung der Formel (IV) umsetzt 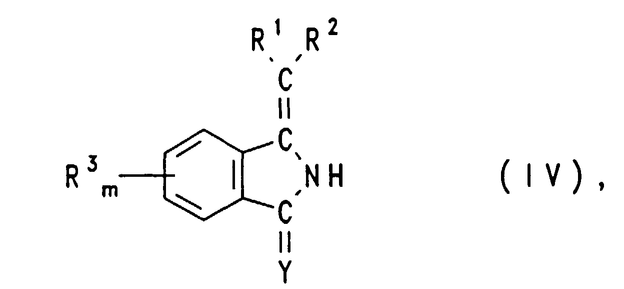 und anschließend
b) die Verbindung der Formel (IV) mit einem Benzimidazolon der Formel (V) umsetzt

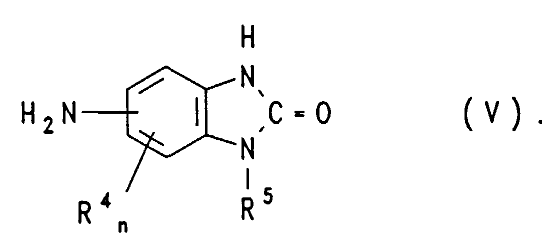

8. Verfahren nach Anspruch 7, dadurch gekennzeichnet, daß der Schritt a) bei einer Temperatur von 30 bis 60°C, vorzugsweise von 45 bis 55°C, und bei einem pH-Wert von 5 bis 9, vorzugsweise von 6 bis 8,5, durchgeführt wird.

9. Verfahren nach Anspruch 7 oder 8, dadurch gekennzeichnet, daß im Schritt b) mit einem 5-Amino-benzimidazolon umgesetzt wird.

10. Verfahren nach mindestens einem der Ansprüche 7 bis 9, dadurch gekennzeichnet, daß der Rest X eine Iminogruppe oder eine (Halb)Aminal- oder eine Ketal-Gruppierung darstellt und der Rest Y eine Iminogruppe ist.

11. Verwendung der Isoindolinpigmente nach mindestens einem der Ansprüche 1 bis 6 zum Pigmentieren von hochmolekularen organischen Materialien.

12. Verwendung nach Anspruch 11 zum Pigmentieren von Druckfarben, Lacken, Kunststoffen, elektrophotographischen Tonern und Entwicklern, triboelektrisch oder elektrokinetisch versprühbaren Pulvern und Pulverlacken sowie Ink-Jet-Tinten.

## Claims

1. An isoindoline pigment of the formula (I) 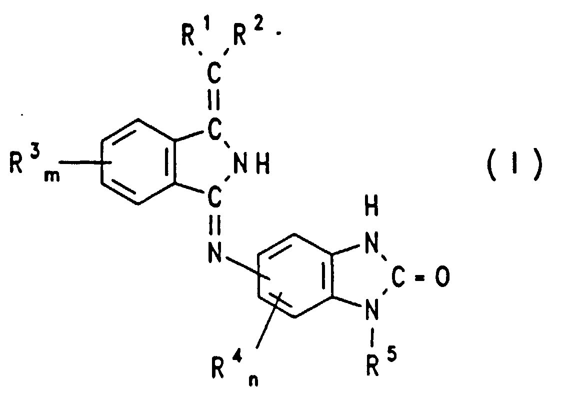 in which
R¹ is -CN;
R² is -CN or is a saturated or unsaturated aromatic or non-aromatic 5- to 7-membered heterocyclic ring system, which can be modified by fusing onto or bridging to further heterocyclic or isocyclic ring systems, the hetero atoms being N, O and/or S;
or is a group -Co-NR⁶R⁷, in which R⁶ and R⁷ are identical or different and are hydrogen or C₁-C₄-alkyl;
or is a group -CO-NR⁶R⁸, in which R⁸ is a saturated or unsaturated, aromatic or non-aromatic, isocyclic or heterocyclic 5- to 7-membered ring which is unsubstituted or substituted by one to 5 radicals from the group consisting of C₁-C₄-alkyl, halogen, trifluoromethyl, C₁-C₄-alkoxy, carbomethoxy, carbethoxy, carboxamide, carboxamide substituted by a C₁-C₄-alkyl or phenyl group, nitro, C₁-C₄-acylamino or hydroxyl and can be modified by fusing onto or bridging to further heterocyclic or isocyclic ring systems, the hetero atoms being N, O and/or S; or in which
R¹ and R² together are a saturated or unsaturated, aromatic or non-aromatic heterocyclic 5- to 7-membered ring which is unsubstituted or substituted by one to 5 radicals from the group consisting of C₁-C₄-alkyl, C₁-C₄-alkoxy, halogen, trifluoromethyl, carbomethoxy, carbethoxy, carboxamide, carboxamide substituted by a C₁-C₄-alkyl or phenyl group, C₁-C₄-acylamino or hydroxyl and can be modified by fusing onto or bridging to further heterocyclic or isocyclic ring systems, the hetero atoms being N, O and/or S;
the radicals R³ and R⁴ have in each case the identical or different meanings of
R³ hydrogen, C₁-C₄-alkyl, phenyl, C₁-C₄-alkoxy, halogen or C₁-C₄-acylamino and
R⁴ hydrogen, C₁-C₄-alkyl, halogen, trifluoromethyl, methoxy, ethoxy or nitro;
m is a number from 1 to 4;
n is a number from 1 to 3; and
R⁵ is hydrogen or C₁-C₄-alkyl.

2. An isoindoline pigment as claimed in claim 1, wherein
R¹ is -CN and
R² is -CN or a benzimidazol-2-yl radical, quinazolon-2-yl radical, quinoxal-2-yl radical or quinolin-2-yl radical;
or is a group -Co-NR⁶R⁷, in which R⁶ and R⁷ are identical or different and are hydrogen, methyl or ethyl;
or is a group -Co-NR⁶R⁸, in which R⁸ is a phenyl ring or naphthyl ring or a phenyl ring or naphthyl ring which is substituted by 1 to 5 halogen atoms or COO(C₁-C₄)-alkyl, acetylamino, CONH₂, C₁-C₄-alkyl, C₁-C₄-alkoxy, CF₃ or hydroxyl groups, or is a benzimidazolyl ring, benzimidazolonyl ring or quinoxalyl ring;
R¹ and R² together form a heterocyclic ring from the group consisting of barbituric acid, 2,4-dioxo-1,2,3,4-tetrahydroquinoline and thionaphthene.

3. An isoindoline pigment as claimed in claim 1 or 2, wherein
R³ is hydrogen, methyl, ethyl, phenyl, methoxy, ethoxy, fluorine, chlorine, bromine or acetylamino;
R⁴ is hydrogen, methyl, ethyl, fluorine, chlorine, bromine, trifluoromethyl, methoxy or ethoxy and
R⁵ is hydrogen, methyl or ethyl.

4. An isoindoline pigment as claimed in at least one of claims 1 to 3, wherein
R¹ is -CN,
R² is -CN, benzimidazol-2-yl, -CONH₂, -CONHC₆H₄Cl, -CONHC₆H₃Cl₂, -CONHC₆H₄CH₃, -CONHC₆H₄COOC₂H₅, -CONHCONH₂, -CONHC₆H₄COOCH₃, -CONHC₆H₃(COOCH₃)₂ or -CONH-naphthyl,
R³ is hydrogen,
R⁴ is hydrogen, Cl, OCH₃ or CH₃,
n is the number 1 and
R⁵ is hydrogen.

5. An isoindoline pigment as claimed in at least one of claims 1 to 4, wherein R¹ and R² together form a barbituric acid, methylbarbituric acid, phenylbarbituric acid, 2,4-dioxo-1,2,3,4-tetrahydroquinoline or 3-hydroxy-thionaphthene ring.

6. An isoindoline pigment of the formula

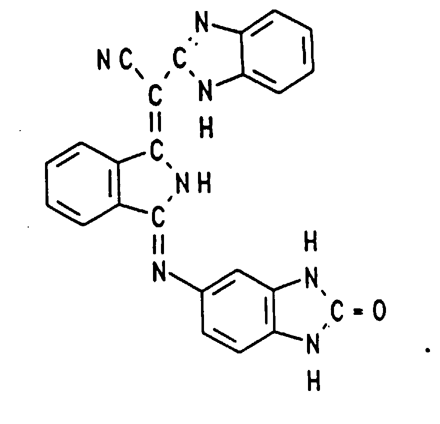

7. A process for the preparation of an isoindoline pigment as claimed in one or more of claims 1 to 6, which comprises a) reacting an isoindoline of the formula (II), which contains nucleophilically replaceable radicals X and Y in the 1- and 3-position, 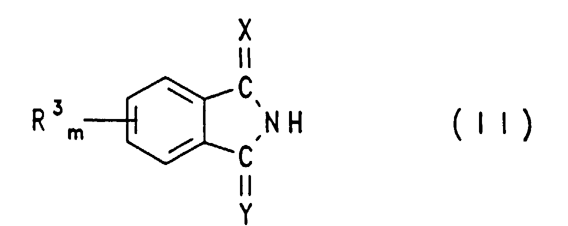 with a compound of the formula (III)
R¹-CH₂-R² (III),
in which the H atoms of the -CH₂- group are CH-acidic, to form a compound of the formula (IV) 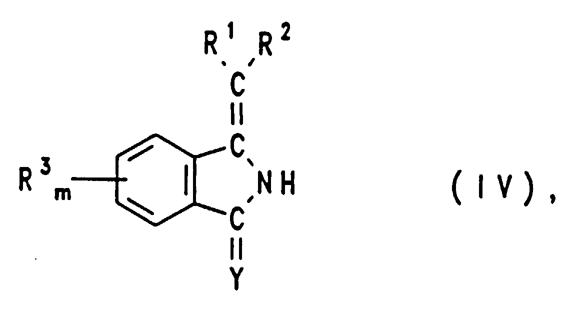 and then
b) reacting the compound of the formula (IV) with a benzimidazolone of the formula (V)

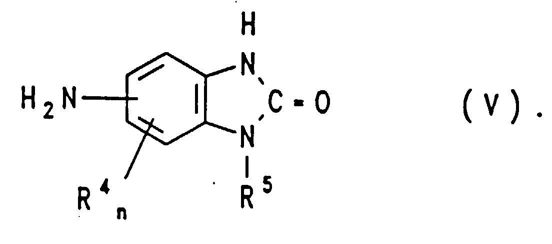

8. The process as claimed in claim 7, wherein step a) is carried out at a temperature of 30 to 60°C preferably of 45 to 55°C and at a pH of 5 to 9, preferably of 6 to 8.5.

9. The process as claimed in claim 7 or 8, wherein the reaction in step b) is carried out with a 5-aminobenzimidazolone.

10. The process as claimed in at least one of claims 7 to 9, wherein the radical X is an imino group or a (half)-aminal grouping or a ketal grouping and the radical Y is an imino group.

11. The use of an isoindoline pigment as claimed in at least one of claims 1 to 6 for pigmenting high molecular weight organic materials.

12. The use as claimed in claim 11 for pigmenting printing inks, coatings, plastics, electrophotographic toners and developers, powders and powder coatings which can be sprayed triboelectrically or electrokinetically and ink-jet inks.

## Revendications

1. Pigment d'isoindoline de formule (I) 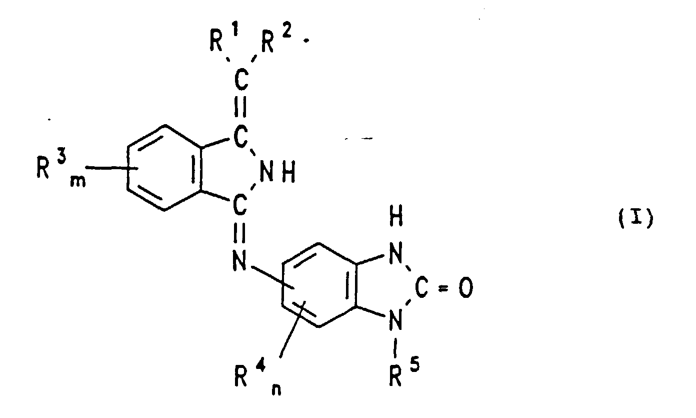 dans laquelle
R¹ a la signification -CN ;
R² a la signification -CN ou est un système cyclique hétérocyclique à 5 à 7 membres, aromatique ou non aromatique, saturé ou non saturé, qui peut être modifié par fixation par condensation d'autres systèmes cycliques hétérocycliques ou isocycliques, ou pontage sur de tels systèmes, les hétéroatomes étant N, O et/ou S ;
ou est un groupe -CO-NR⁶R⁷, dans lequel R⁶ et R⁷ sont identiques ou différents, et représentent l'hydrogène, ou alkyle en C₁-C₄ ;
ou est un groupe -CO-NR⁶R⁸, dans lequel R⁸ représente un cycle à 5 à 7 membres, isocyclique ou hétérocyclique, aromatique ou non aromatique, saturé ou non saturé, non substitué ou substitué par 1 à 5 radicaux alkyle en C₁-C₄, halogène, trifluorométhyle, alcoxy en C₁-C₄, carbométhoxy, carboéthoxy, carboxamide, carboxamide substitué par un groupe alkyle en C₁-C₄ ou phényle, nitro, acylamino en C₁-C₄ ou hydroxy, lequel cycle peut être modifié par fixation par condensation d'autres systèmes cycliques hétérocycliques ou isocycliques, ou pontage sur de tels systèmes, les hétéroatomes étant N, O et/ou S ; ou dans laquelle
R¹ et R² représentent ensemble un cycle hétérocyclique à 5 à 7 membres, aromatique ou non aromatique, saturé ou insaturé, non substitué ou substitué par 1 à 5 radicaux alkyle en C₁-C₄, alcoxy en C₁-C₄, halogène, trifluorométhyle, carbométhoxy, carboéthoxy, carboxamide, carboxamide substitué par un groupe alkyle en C₁-C₄ ou phényle, acylamino en C₁-C₄ ou hydroxy, lequel cycle à 5 à 7 membres peut être modifié par fixation par condensation d'autres systèmes cycliques hétérocycliques ou isocycliques, ou pontage sur de tels systèmes, les hétéroatomes étant N, O et/ou S ;
les radicaux R³ et R⁴, à chaque fois identiques ou différents, ont les significations
R³ hydrogène, alkyle en C₁-C₄, phényle, alcoxy en C₁-C₄, halogène ou acylamino en C₁-C₄ ;
R⁴ hydrogène, alkyle en C₁-C₄, halogène, trifluorométhyle, méthoxy, éthoxy ou nitro ;
m est un nombre de 1 à 4 ;
n est un nombre de 1 à 3 ; et
R⁵ représente l'hydrogène ou alkyle en C₁-C₄.

2. Pigment d'isoindoline selon la revendication 1, caractérisé en ce que
R¹ a la signification -CN ; et
R² a la signification -CN ou est un radical benzimidazolyle-2, quinazolonyle-2, quinoxalyle-2-ou quinoléinyle-2 ; ou est un groupe -CO-NR⁶R⁷, dans lequel R⁶ et R⁷ sont identiques ou différents et représentent l'hydrogène, méthyle ou éthyle ;
ou est un groupe -CO-NR⁶R⁸, dans lequel R⁸ est un cycle phényle ou naphtyle, un cycle phényle ou naphtyle substitué par 1 à 5 atomes d'halogène, groupes COO(alkyle en C₁-C₄), acétylamino, CONH₂, alkyle en C₁-C₄, alcoxy en C₁-C₄, CF₃ ou hydroxy, ou est un cycle benzimidazolyle, benzimidazolonyle ou quinoxalyle ;
(ou dans laquelle)
R¹ et R² forment ensemble un cycle hétérocyclique du groupe de l'acide barbiturique, de la 2,4-dioxo-1,2,3,4-tétrahydroquinoléine et du thionaphtène.

3. Pigment d'isoindoline selon la revendication 1 ou 2, caractérisé en ce que
R³ représente l'hydrogène, méthyle, éthyle, phényle, méthoxy, éthoxy, le fluor, le chlore, le brome ou acétylamino ;
R⁴ représente l'hydrogène, méthyle, éthyle, le fluor, le chlore, le brome, trifluorométhyle, méthoxy ou éthoxy et
R⁵ représente l'hydrogène, méthyle ou éthyle.

4. Pigment d'isoindoline selon au moins l'une des revendications 1 à 3, caractérisé en ce que
R¹ a la signification -CN ;
R² a la signification -CN, benzimidazolyle-2, -CONH₂, -CONHC₆H₄Cl, -CONHC₆H₃Cl₂, -CONHC₆H₄CH₃, -CONHC₆H₄COOC₂H₅, -CONHCONH₂, -CONHC₆H₄COOCH₃, -CONHC₆H₃(COOCH₃)₂ ou -CONH-naphtyle,
R³ a la signification hydrogène,
R⁴ a la signification hydrogène, Cl, OCH₃ ou CH₃,
n est le nombre 1 et
R⁵ a la signification hydrogène.

5. Pigment d'isoindoline selon au moins l'une des revendications 1 à 4, caractérisé en ce que R¹ et R² forment ensemble un cycle acide barbiturique, acide méthylbarbiturique, acide phénylbarbiturique, 2,4-dioxo-1,2,3,4-tétrahydroquinoléine ou 3-hydroxy-thionaphtène.

6. Pigment d'isoindoline de formule

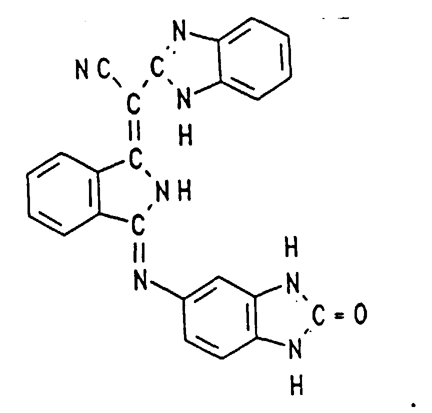

7. Procédé pour la préparation d'un pigment d'isoindoline selon l'une ou plusieurs des revendications 1 à 6, caractérisé en ce que a) on fait réagir une isoindoline de formule (II), qui contient en positions 1 et 3 des radicaux X et Y échangeables de façon nucléophile 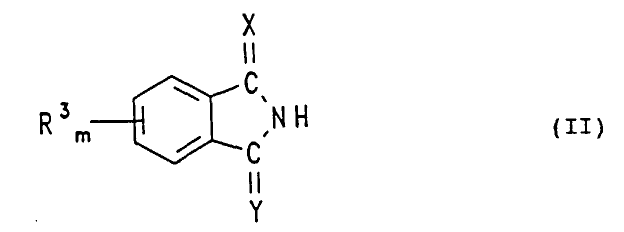 avec un composé de formule (III)
R¹-CH₂-R² (III),
dans laquelle les atomes de H du groupe -CH₂- sont des CH-acides, avec formation d'un composé de formule (IV) 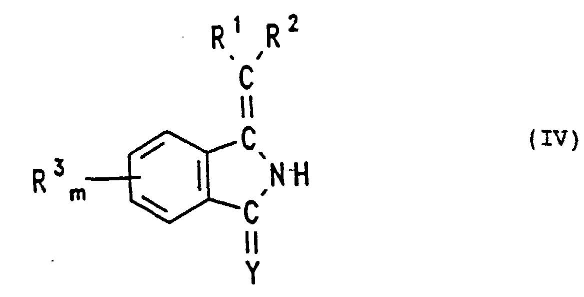 et ensuite
b) on fait réagir le composé de formule (IV) avec une benzimidazolone de formule (V)

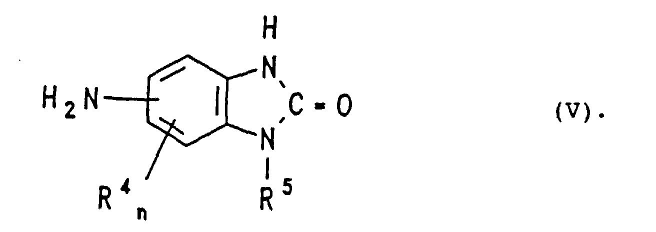

8. Procédé selon la revendication 7, caractérisé en ce que l'étape a) est effectuée à une température de 30 à 60°C, de préférence de 45 à 55°C, et à une valeur du pH de 5 à 9, de préférence de 6 à 8,5.

9. Procédé selon la revendication 7 ou 8, caractérisé en ce que dans l'étape b) on fait réagir avec une 5-amino-benzimidazolone.

10. Procédé selon au moins l'une des revendications 7 à 9, caractérisé en ce que le radical X représente un groupe imino ou un groupement (semi)aminal ou cétal et le radical Y est un groupe imino.

11. Utilisation des pigments d'isoindoline selon au moins l'une des revendications 1 à 6 pour pigmenter des matières organiques de masse molaire élevée.

12. Utilisation selon la revendication 11 pour pigmenter des encres d'imprimerie, des vernis, des matières plastiques, des toners et des développeurs électrophotographiques, des poudres pulvérisables tribo-électriquement ou électrocinétiquement et des vernis en poudre ainsi que des teintures pour jet d'encre.
